Europäisches Patentamt

European Patent Office

Office européen des brevets

(11) Numéro de publication: **0 552 075 B1**

# FASCICULE DE BREVET EUROPEEN

(45) Date de publication de fascicule du brevet: **28.06.95**

(51) Int. Cl.6: **C09K 5/04**, C09K 3/30, C08J 9/14

(21) Numéro de dépôt: **93400036.5**

(22) Date de dépôt: **08.01.93**

(54) **Mélanges de 1,1,1-trifluoroéthane et de perfluoropropane et leurs applications comme fluides frigorigènes, comme propulseurs d'aérosols ou comme agents d'expansion des mousses plastiques.**

(30) Priorité: **13.01.92 FR 9200260**

(43) Date de publication de la demande:
**21.07.93 Bulletin 93/29**

(45) Mention de la délivrance du brevet:
**28.06.95 Bulletin 95/26**

(84) Etats contractants désignés:
**AT BE CH DE DK ES FR GB GR IE IT LI LU NL PT SE**

(56) Documents cités:
EP-A- 0 314 978   EP-A- 0 315 069
EP-A- 0 349 647   EP-A- 0 427 604
EP-A- 0 430 170   FR-A- 1 542 023
FR-A- 2 361 454

(73) Titulaire: **ELF ATOCHEM S.A.**
**4 & 8, Cours Michelet**
**La Défense 10**
**F-92800 Puteaux (FR)**

(72) Inventeur: **Macaudière, Sylvie**
**64 Rue de Nanterre**
**F-92600 Asnières (FR)**
Inventeur: **Tanguy, Jean-Claude**
**7 Rue du Lieutenant Keiser**
**F-95110 Sannois (FR)**

(74) Mandataire: **Leboulenger, Jean et al**
**ATOCHEM**
**Département Propriété Industrielle**
**Cédex 42- La Défense 10**
**F-92091 Paris la Défense (FR)**

**Description**

La présente invention concerne des mélanges de fluides frigorigènes à bas point d'ébullition, n'ayant pas ou peu d'action sur l'environnement et destinés à remplacer les chlorofluorocarbures (CFC) dans les systèmes de réfrigération basse température à compression.

Il est maintenant établi qu'à cause de leur coefficient important d'action sur l'ozone, les CFC seront, à plus ou moins longue échéance, remplacés par des fluides frigorigènes ne contenant plus de chlore et, de ce fait, moins agressifs vis-à-vis de l'environnement.

Le 1,1,1-trifluoroéthane (HFC 143a) et le perfluoropropane (FC 218) ont, comparativement aux composés chlorés totalement halogénés, une très faible action sur l'environnement. Le HFC 143a présente cependant l'inconvénient d'être inflammable. Quant au FC 218, son utilisation en réfrigération se traduit par une puissance frigorifique relativement faible, un taux de compression élevé et, par conséquent, des coûts d'exploitation élevés.

Il a maintenant été trouvé que les mélanges contenant en masse environ 40 à 70 % de HFC 143a et 30 à 60 % de FC 218 présentent un maximum de tension de vapeur par rapport aux tensions de vapeur des composés purs.

D'autre part, pour des fractions massiques de HFC 143a comprises entre 41 et 60,3 % et de FC 218 comprises entre 39,7 et 59 %, les mélanges présentent un comportement pseudo-azéotropique et sont ininflammables au contraire du HFC 143a.

Il a également été trouvé que les deux constituants ensemble forment un azéotrope à point d'ébullition minimum égal à environ -49,8°C sous 1,013 bar et dont la teneur en HFC 143a au point d'ébullition normal est d'environ 55 % en masse et celle en FC 218 d'environ 45 %.

Du fait de leur bas point d'ébullition, les mélanges selon l'invention peuvent être utilisés comme fluides frigorigènes dans les applications aux basses températures (-40°C ; -50°C) comme dans le cas de la réfrigération industrielle ou commerciale basse température. Un mélange frigorigène tout particulièrement préféré est l'azéotrope décrit plus haut.

Compte tenu de leurs propriétés physiques proches de celles des CFC, les mélanges selon l'invention peuvent également être utilisés comme propulseurs d'aérosols ou comme agents d'expansion des mousses plastiques.

Les exemples suivants illustrent l'invention, sans la limiter.

## EXEMPLE 1

L'azéotrope selon l'invention a été étudié expérimentalement à différentes températures par analyse, en chromatographie phase gaz, des compositions de la phase liquide et de la phase vapeur pour différents mélanges de HFC 143a et FC 218.

Les pressions ont été mesurées avec une précision supérieure à 0,02 bar au moyen d'un manomètre HEISE. Les températures ont été mesurées à 0,02°C près au moyen d'une sonde de platine 1 000 ohms.

Le Graphe 1 en annexe représente la courbe d'équilibre liquide/vapeur des mélanges HFC 143a/FC 218, établie à la température de -0,4°C. Sur ce graphe, l'axe des abscisses indique la fraction massique en HFC 143a et l'axe des ordonnées la pression absolue en bars ; les carrés noirs correspondent aux points expérimentaux.

Pour chaque température, on obtient une courbe analogue à celle du Graphe 1. Par ajouts successifs de HFC 143a dans le FC 218, la pression développée par le mélange augmente régulièrement, puis passe par un maximum et décroît régulièrement ce qui met en évidence l'existence de l'azéotrope à point d'ébullition minimum.

## EXEMPLE 2

L'azéotrope HFC 143a/FC 218 a également été mis en évidence expérimentalement en mesurant la température d'ébullition sous 1,013 bar de différents mélanges de HFC 143a et FC 218.

Les pressions ont été mesurées avec une précision supérieure à 0,005 bar au moyen d'un manomètre HEISE. Les températures ont été ajustées par pas de 0,1°C afin d'atteindre une pression de 1,013 bar.

Les points normaux d'ébullition ainsi déterminés pour différentes compositions en HFC 143a et FC 218 sont indiqués dans le tableau suivant :

TABLEAU 1

| Composition massique en HCF 143a (%) | Point d'ébullition normal (°C) |
|---|---|
| 100 | - 47,3 |
| 60,3 | - 49,7 |
| 54,8 | - 49,8 |
| 50,0 | - 49,8 |
| 44,7 | - 49,8 |
| 41,0 | - 49,6 |
| 0 | - 37,0 |

Les résultats de ce tableau mettent en évidence un minimum de point d'ébullition normal pour une fraction massique de HFC 143a égale à environ 44,7-54,8 %. Toutefois, on remarque que pour des fractions massiques en HFC 143a de 41 à 60,3 % le mélange se comporte comme un quasi-azéotrope.

La corrélation des points expérimentaux ainsi obtenus a été effectuée selon des techniques bien connues, au moyen d'une simulation informatique.

Les résultats de ces corrélations mettent en évidence le minimum du point d'ébullition normal pour une fraction massique du HFC 143a égale à 55 % ; ce qui permet de caractériser l'azéotrope par :
. son point d'ébullition normal qui est égal à environ - 49,8 °C
. sa composition massique en HFC 143a égale à environ 55 %

Le tableau 2 suivant donne la relation pression/température pour un mélange contenant en masse environ 55 % de HFC 143a et 45 % de FC 218, comparée à celle des corps purs.

**TABLEAU 2**

| TEMPERATURE (°C) | PRESSION ABSOLUE (BAR) | | |
|---|---|---|---|
| | Azéotrope HFC 143a/FC 218 | HFC 143a pur | FC 218 pur |
| - 40 | 1,59 | 1,42 | 0,87 |
| - 20 | 3,50 | 3,17 | 2,04 |
| 0 | 6,74 | 6,21 | 4,16 |
| + 20 | 11,81 | 11,04 | 7,67 |
| + 40 | 19,45 | 18,27 | 12,98 |

La tension de vapeur de l'azéotrope reste sur une large game de température supérieure à la tension de vapeur des corps purs. Ces données indiquent que le mélange reste azéotropique dans tout cet intervalle de température.

**EXEMPLE 3**

Cet exemple illustre l'utilisation des mélanges selon l'invention comme fluides frigorigènes.

Les performances thermodynamiques de différents mélanges selon l'invention ont été comparées aux performances des deux constituants seuls et à celles du CFC 502 (mélange azéotropique contenant en masse 48,8 % de chlorodifluorométhane et 51,2 % de chloropentafluoroéthane), pour un cycle thermodynamique standard défini comme suit :

| . température de condensation | + 30 °C |
|---|---|
| . température d'évaporation | - 40 °C |
| . sous-refroidissement liquide | - 15 °C |
| . surchauffe des vapeurs | + 25 °C |

Le tableau 3 résume les performances thermodynamiques observées dans ces conditions pour le HFC 143a pur, le FC 218 pur, leurs mélanges et le CFC 502.

**TABLEAU 3**

| Composition HFC 143a/FC 218 (% en masse) | COP (*) | Capacité frigorifique volumétrique (*) | Taux de compression | Température de refoulement (°C) |
|---|---|---|---|---|
| 100/0 | 0,981 | 1,080 | 10,3 | 69 |
| 70/30 | 0,958 | 1,100 | 10,0 | 59 |
| 60/40 | 0,955 | 1,095 | 9,8 | 56 |
| 55/45 | 0,951 | 1,085 | 9,8 | 54 |
| 50/50 | 0,947 | 1,070 | 9,9 | 53 |
| 45/55 | 0,936 | 1,035 | 10,0 | 51 |
| 40/60 | 0,925 | 0,995 | 10,2 | 50 |
| 20/80 | 0,872 | 0,780 | 11,6 | 45 |
| 0/100 | 0,925 | 0,590 | 11,7 | 34 |
| CFC 502 | 1 | 1 | 10,2 | 68 |

**(*) relativement au CFC 502**

On peut observer que les mélanges selon l'invention offrent un certain nombre d'avantages sur le HFC 143a pur, le FC 218 pur ou le CFC 502, notamment :

. un taux de compression plus faible, améliorant le rendement volumétrique du compresseur et entraînant de ce fait des coûts moindres d'exploitation de l'installation ;

. une température de refoulement plus faible d'au moins 10 °C par rapport au CFC 502 ou au HFC 143a, ce qui favorise la bonne stabilité du mélange dans un circuit frigorifique ;

. une puissance frigorifique volumétrique disponible plus élevée, ce qui pratiquement, pour une puissance frigorifique donnée, permet l'utilisation d'un compresseur plus petit que celui défini pour utiliser le CFC 502.

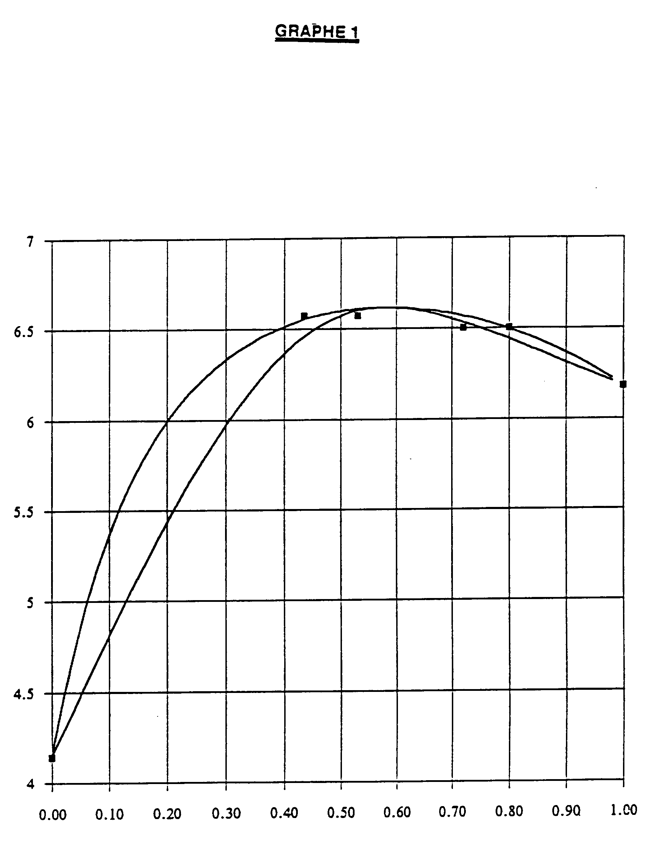

**Revendications**

1. Mélange contenant en masse environ 40 à 70 % de 1,1,1-trifluoroéthane et 30 à 60 % de perfluoropropane.

2. Mélange selon la revendication 1, contenant en masse environ 41 % à 60,3 % de 1,1,1-trifluoroéthane et 39,7 à 59 % de perfluoropropane.

4

3. Mélange selon la revendication 2, caractérisé en ce qu'il contient en masse environ 55 % de 1,1,1-trifluoroéthane et 45 % de perfluoropropane, et correspond à un mélange azéotropique à bas point d'ébullition minimal (environ -49,8°C sous 1,013 bar).

4. L'utilisation d'un mélange selon l'une des revendications 1 à 3 comme fluide frigorigène.

5. L'utilisation d'un mélange selon l'une des revendications 1 à 3 comme propulseur d'aérosols.

6. L'utilisation d'un mélange selon l'une des revendications 1 à 3 comme agent d'expansion des mousses plastiques.

**Claims**

1. Mixture containing, by mass, about 40 to 70 % of 1,1,1-trifluoroethane and 30 to 60 % of perfluoropropane

2. Mixture according to Claim 1, containing, by mass, about 41 % to 60.3 % of 1,1,1-trifluoroethane and 39.7 to 59 % of perfluoropropane.

3. Mixture according to Claim 2, characterised in that it contains, by mass, about 55 % of 1,1,1-trifluoroethane and 45 % of perfluoropropane and corresponds to an azeotropic mixture of low minimum boiling point (about -49.8°C at 1.013 bar).

4. The use of a mixture according to one of Claims 1 to 3 as refrigerant.

5. The use of a mixture according to one of Claims 1 to 3 as aerosol propellant.

6. The use of a mixture according to one of Claims 1 to 3 as blowing agent for plastic foams.

**Patentansprüche**

1. Mischung, enthaltend etwa 40 bis 70 Gew.-% 1,1,1-Trifluorethan und 30 bis 60 Gew.-% Perfluorpropan.

2. Mischung nach Anspruch 1, enthaltend etwa 41 bis 60,3 Gew.-% 1,1,1-Trifluorethan und 39,7 bis 59 Gew.-% Perfluorpropan.

3. Mischung nach Anspruch 2, dadurch gekennzeichnet, daß sie etwa 55 Gew.-% 1,1,1-Trifluorethan und 45 Gew.-% Perfluorpropan enthält und einer azeotropen Mischung mit tiefliegendem Siedepunktsminimum (etwa -49,8 °C bei 1,013 bar) entspricht.

4. Verwendung einer Mischung nach einem der Ansprüche 1 bis 3 als Kältemittel.

5. Verwendung einer Mischung nach einem der Ansprüche 1 bis 3 als Aerosoltreibmittel.

6. Verwendung einer Mischung nach einem der Ansprüche 1 bis 3 als Blähmittel für Kunststoffschäume.

## <u>GRAPHE 1</u>